# EUROPEAN PATENT SPECIFICATION

(11) **EP 1 172 656 B1**
(45) Date of publication and mention of the grant of the patent: **26.04.2006**
(21) Application number: 00305969.8
(22) Date of filing: 13.07.2000
(51) Int. Cl.: G01P 13/04, G01P 3/44

(54) **Rotational direction detecting**
Drehrichtungserfassung
Détection du sens de rotation

(43) Date of publication of application: 16.01.2002
(73) Proprietor: Infineon Technologies SensoNor AS, 3192 Horten (NO)
(72) Inventor: Holm, Reidar, c/o SensoNor asa, 3192 Horten (NO)
(74) Representative: Haley, Stephen

(56) References cited:
- EP-A- 0 517 082
- DE-A- 4 207 371
- DE-A- 19 703 832
- US-A- 4 566 327

## Description

This invention relates to a device for detecting the direction of rotation of a rotating body such as a vehicle wheel.

Many devices have been proposed for provision of a signal for indication of the rotational direction of a rotating body, as well as for providing an indication of the rotational speed of that body. Such devices are, however, often complex and costly, and require sensitive electronic and mechanical devices that can be damaged very easily and which are difficult to manufacture and install. Furthermore, many devices usually require the connection of a constant power supply and are generally devices with high power consumption levels. The document DE 4 207 371 A1 discloses a sensor for detecting the direction of rotation which comprises a magnetic encoder.

Accordingly, there is a need for a low cost low power consumption device that is reliable and of simple construction and which is able to provide an output indicative of the direction of rotation of a rotating body.

The documents DE 19 703 832 A1, EP 0 517 082 A2 and US 4 566 327 disclose rotational speed sensors, where the angular speed information is taken from the cyclical gravity modulation of centrigugal acceleration signals.

According to the present invention there is provided a sensor for sensing a direction of rotation of a body, the sensor comprising:
a first accelerometer arranged, in use, on the body, and having a first sensing direction; and
a second accelerometer arranged, in use, on the body and having a second sensing direction, characterised by:
   the two accelerometers being arranged such that the first and second sensing directions are not parallel to one another and are not parallel to the axis of rotation of the body such that there is a phase difference due to gravitational effects between the outputs of the accelerometers when the body rotates in use; and
   means for receiving the acceleration indicative output signals from the first and second accelerometers and for determining the phase relationship between the two signals to thereby determine the direction of rotation of the body.

The first sensing direction and the second sensing direction may be perpendicular to one another.

The accelerometers may be of the resonant, capacitive or piezoresistive mass type.

The accelerometers may be of the micromachined type.

The first and second accelerometers may be positioned at the same location on the rotating body.

A corresponding method is also provided.

The sensor and method of the invention are on rotating bodies which are rotating about an axis which is not parallel to the direction of gravitational pull. This is because gravitational force generates a phase difference between the two accelerometer outputs that can be used to form the comparison which determines rotational direction.

Because simple accelerometers can be employed in the device and a simple phase relationship used to determine the direction of rotation, it is not necessary for the device of the invention to employ complex components, and the overall circuitry of the device is simplified and requires little power. This means that it can be driven from a simple battery or stand-alone power supply and still have a life time of ten or more years.

This provides the advantage that the device can be stand-alone in a relatively inaccessible rotating body such as a vehicle wheel, and does not need extent power supplies to drive it.

One example of the present invention will now be described with reference to the accompanying drawings, in which:
Figure 1 is a schematic diagram of a rotating body having an example device of the present invention attached thereto;
Figure 2 is a graph showing the output signals as a function of time from the two accelerometers in the device of figure 1 during rotation of the body of figure 1; and
Figure 3 is a schematic diagram showing circuitry employed in the device of figure 1.

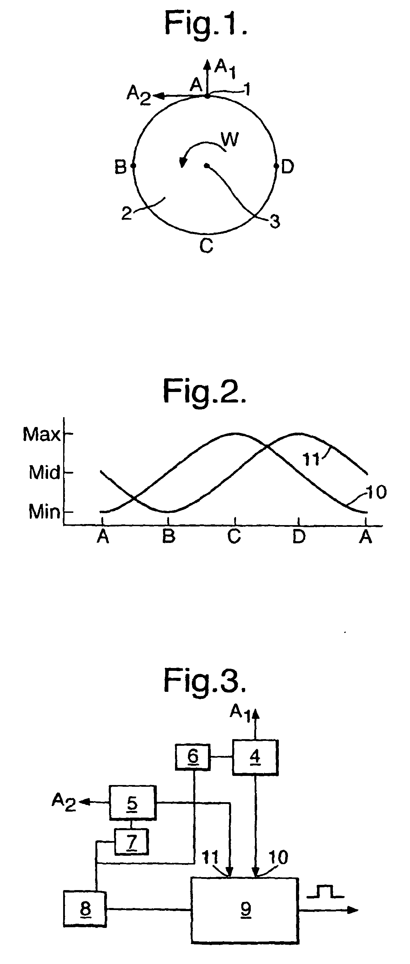

Referring to figure 1, a device 1 according to the present invention is positioned on the periphery of a rotating body 2, the direction of rotation of which is to be determined. The body 2 can rotate in either direction about an axis 3. The device 1 of the invention will be described in more detail below in relation to figure 3, but comprises two accelerometers 4,5 (figure 3), each having a sensitive direction A1, A2 in which variations in the accelerative force on the respective accelerometer 4,5 can be measured by the respective accelerometer 4,5.

In this example the accelerometers 4,5 are located at the same position on the periphery of the body 2, although this is not essential. Furthermore, in this example the sensing directions A1, A2 are perpendicular to one another, but again, this is not essential. In order for the device to work, the accelerometers 4, 5, must be positioned on the body with their sensing direction arranged such that the phase difference between their outputs 10, 11 is not 0° or 180°. Indeed, it is preferable to have outputs of ±90° difference. As mentioned above, the sensor will work on rotating bodies that are rotating about an axis not parallel to the directional gravitational pull, as the accelerometer outputs are given a phase difference by the effect of gravitational pull and the positioning of accelerometers 4, 5 as they rotate with the body 2.

In use, when the body 2 is rotated about the axis 3, the accelerometers 4,5 provide output signals 10,11 as shown in figure 2. Figure 2 shows the output signals as the device 1 rotates and passes through points A,B,C and D shown in figure 1. Figure 2 shows the case where both accelerometers are matched and have output amplitudes that have been altered to match, but it is not essential that this is the case in order for the device 1 to work. Indeed, in practice the first accelerometer 4 will have an offset due to centrifugal force, but this is not of concern because of the relative nature of the phase relationship comparison that is performed by the receiving and comparison means 9 described below. As can be seen from figure 2, the two outputs 10,11 have a phase difference of 90° that results from the effect of gravitational acceleration on the two devices due to their differing sensing directions. Figure 2 shows the optimum position where the two accelerometers 4,5 are positioned to have sensing directions perpendicular to one another and respectively radially and tangentially disposed with respect to the body 2 rotating about an axis 3 which is perpendicular to the gravitational force. It will be understood that the phase relationship of 90° will change if this is not the case, reducing or increasing in size. This value of phase difference does not matter, however, in relation to the operation of the device, as will be explained below.

Figure 3 is a schematic diagram of the device of figure 1, showing its key components.

Accelerometers 4,5 are positioned on the body 2 as explained above. They are driven by respective drive circuitry 6,7 from a common stand-alone power supply 8 which may be a simple battery. Each accelerometer 4,5 provides an output 10,11 to receiving means 9 which compares the phase difference between the outputs 10,11 of the two accelerometers 4,5 and provides an output signal based upon whether there is a negative or positive phase difference between the two signals. This output signal may be a simple binary zero or one dependent upon the positive or negative nature of the phase difference and represents, because of that phase difference, the rotational direction of the rotating body 2.

Because very simple and not particularly sensitive accelerometers 4,5 can be employed, and because their outputs do not need to be balanced, their drive circuitry and output circuitry is very simple and can be implemented to have an extremely low power consumption. Furthermore, because the comparison circuitry provides a very simple output it also can be produced from very simple components that are also of low power consumption. This results in a device which is very robust yet provides a simple and effective directional output indicator. Overall, this means that the device can be configured easily to be positioned without any complex wiring within remote and inaccessible rotating bodies without the need for regular maintenance and/or a constant power supply, providing considerable advantages over the prior art.

## Claims

1. A sensor (1) for sensing a direction of rotation of a body (2), the sensor comprising:
a first accelerometer (4) arranged, in use, on the body, and having a first sensing direction; and
a second accelerometer (5) arranged, in use, on the body and having a second sensing direction, **characterised by**:
the two accelerometers being arranged such that the first and second sensing directions are not parallel to one another and are not parallel to the axis (3) of rotation of the body such that there is a phase difference due to gravitational effects between the outputs of the accelerometers when the body rotates in use; and
means for receiving the acceleration indicative output signals from the first and second accelerometers and for determining the phase relationship between the two signals to thereby determine the direction of rotation of the body.

2. A sensor (1) according to claim 1, wherein the first sensing direction and the second sensing direction are perpendicular to one another.

3. A sensor (1) according to claim 2, wherein one sensing direction is in the direction of rotation.

4. A sensor (1) according to claim 1, or 3, wherein the accelerometers (4, 5) are of the resonant, capacitive or piezoresistive type.

5. A sensor (1) according to any of claims 1 to 4, wherein the first and second accelerometers (4, 5) are positioned at the same location on the rotating body (2).

6. A sensor (1) according to any of claims 1 to 5, wherein the accelerometers (, 5) are of the micromachined type.

7. A method for sensing a direction of rotation of a body (2), the method comprising the steps of:
placing a first accelerometer (4) on the body, the accelerometer having a first sensing direction;
placing a second accelerometer (5), on the body, the accelerometer having a second sensing direction, and **characterised by**:
the two accelerometers being placed such that the first and second sensing directions are not parallel to one another and are not parallel to the axis of rotation (3) of the body, such that there is a phase difference due to gravitational effects between the outputs of the accelerometers when the body rotates in use;
receiving the acceleration indicative output signals from the first and second accelerometers; and
determining the phase relationship between the two signals to thereby determine the direction of rotation of the body.

## Patentansprüche

1. Sensor (1) zur Erfassung einer Drehrichtung eines Körpers (2), wobei der Sensor umfaßt:
einen ersten Beschleunigungsmesser (4), der im Gebrauch an dem Körper angeordnet ist und eine erste Erfassungsrichtung hat; und
einen zweiten Beschleunigungsmesser (5), der im Gebrauch an dem Körper angeordnet ist und eine zweite Erfassungsrichtung hat, **dadurch gekennzeichnet,**
**daß** die beiden Beschleunigungsmesser derart angeordnet sind, daß die ersten und zweiten Erfassungsrichtungen nicht parallel zueinander und nicht parallel zu der Achse (3) der Drehung des Körpers sind, derart, daß eine Phasendifferenz aufgrund gravitationsgemäßer Effekte zwischen den Ausgangssignalen der Beschleunigungsmesser besteht, wenn sich der Körper im Gebrauch dreht; und
**daß** eine Einrichtung vorgesehen ist zum Empfang der für die Beschleunigung bezeichnenden Ausgangssignale von dem ersten und zweiten Beschleunigungsmesser und zum Bestimmen der Phasenbeziehung zwischen den beiden Signalen, um dabei die Drehrichtung des Körpers zu bestimmen.

2. Sensor (1) nach Anspruch 1, bei welchem die erste Erfassungsrichtung und die zweite Erfassungsrichtung senkrecht zueinander sind.

3. Sensor (1) nach Anspruch 2, bei welchem eine Erfassungsrichtung in der Drehrichtung ist.

4. Sensor (1) nach Anspruch 1 oder 3, bei welchem die Beschleunigungsmesser (4, 5) vom resonanten, kapazitiven oder piezo-resistiven Typ sind.

5. Sensor (1) nach einem der Ansprüche 1 bis 4, bei welchem der erste und zweite Beschleunigungsmesser (4, 5) an derselben Stelle an dem drehenden Körper (2) positioniert sind.

6. Sensor (1) nach einem der Ansprüche 1 bis 5, bei welchem die Beschleunigungsmesser (4, 5) vom mikrobearbeiteten Typ sind.

7. Verfahren zur Erfassung einer Drehrichtung eines Körpers (2), wobei das Verfahren die Schritte umfaßt:
Anordnen eines ersten Beschleunigungsmesser (4) an dem Körper, wobei der Beschleunigungsmesser eine erste Erfassungsrichtung hat;
Anordnen eines zweiten Beschleunigungsmessers (5) an dem Körper, wobei der Beschleunigungsmesser eine zweite Erfassungsrichtung hat und **dadurch gekennzeichnet ist, daß**:
die beiden Beschleunigungsmesser derart angeordnet sind, daß die ersten und zweiten Erfassungsrichtungen nicht zueinander parallel und nicht zu der Achse der Drehung (3) des Körpers parallel sind, derart, daß eine Phasendifferenz besteht aufgrund der gravitationsgemäßen Effekte zwischen den Ausgangssignalen der Beschleunigungsmesser, wenn sich der Körper im Gebrauch dreht;
Empfangen der für die Beschleunigung bezeichnenden Ausgangssignale von dem ersten und zweiten Beschleunigungsmesser; und
Bestimmen der Phasenbeziehung zwischen den beiden Signalen, um dabei die Drehrichtung des Körpers zu bestimmen.

## Revendications

1. Détecteur (1) pour détecter le sens de rotation d'un corps (2), le détecteur comprenant:
un premier accéléromètre (4) agencé, en service, sur le corps, et ayant une première direction de détection; et
un second accéléromètre (5) agencé, en service, sur le corps et ayant une seconde direction de détection,
**caractérisé en ce que**:
les deux accéléromètres sont agencés de telle manière que la première et la seconde directions de détection ne sont pas parallèles entre elles et ne sont pas parallèles à l'axe (3) de rotation du corps de telle sorte qu'il y a une différence de phase due aux effets gravitationnels entre les sorties des accéléromètres quand, en service, le corps est mis en rotation; et
des moyens pour recevoir les signaux de sortie indicatifs de l'accélération depuis le premier et le second accéléromètres et pour déterminer la relation de phase entre les deux signaux afin d'ainsi déterminer le sens de rotation du corps.

2. Détecteur (1) selon la revendication 1, dans lequel la première direction de détection et la seconde direction de détection sont perpendiculaires l'une à l'autre.

3. Détecteur (1) selon la revendication 2, dans lequel une direction de détection est dans la direction de la rotation.

4. Détecteur (1) selon la revendication 1, ou 3, dans lequel les accéléromètres (4, 5) sont du type à résonance, capacitif ou piézorésistif.

5. Détecteur (1) selon l'une quelconque des revendications 1 à 4, dans lequel le premier et le second accéléromètres (4, 5) sont situés au même emplacement sur le corps (2) en rotation.

6. Détecteur (1) selon l'une quelconque des revendications 1 à 5, dans lequel les accéléromètres (4, 5) sont de type à micro-usinage.

7. Méthode de détection du sens de rotation d'un corps (2), la méthode comprenant les étapes consistant à:
placer un premier accéléromètre (4) sur le corps, l'accéléromètre ayant une première direction de détection;
placer un second accéléromètre (5), sur le corps, l'accéléromètre ayant une seconde direction de détection, et **caractérisée en ce que**:
les deux accéléromètres sont placés de telle sorte que la première et la seconde directions de détection ne sont pas parallèles entre elles et ne sont pas parallèles à l'axe de rotation (3) du corps, de telle sorte qu'il y a une différence de phase due aux effets gravitationnels entre les sorties des accéléromètres quand, en service, le corps est mis en rotation;
recevoir les signaux de sortie indicatifs de l'accélération depuis le premier et le second accéléromètres; et
déterminer la relation de phase entre les deux signaux afin d'ainsi déterminer le sens de rotation du corps.
